# EUROPEAN PATENT SPECIFICATION

(11) **EP 3 229 298 B1**
(45) Date of publication and mention of the grant of the patent: **12.12.2018**
(21) Application number: 17164167.3
(22) Date of filing: 31.03.2017
(51) Int. Cl.: H01M 4/90, H01M 4/86, H01M 8/1213, H01M 8/1253, H01M 8/124, H01M 10/04, C04B 35/48

(54) **MEMBRANE ELECTRODE ASSEMBLY AND SOLID OXIDE FUEL CELL**
MEMBRANELEKTRODENANORDNUNG UND FESTOXIDBRENNSTOFFZELLE
ASSEMBLAGE MEMBRANE ÉLECTRODE ET PILE À COMBUSTIBLE À OXYDE SOLIDE

(30) Priority: 04.04.2016 JP 2016075477
(43) Date of publication of application: 11.10.2017
(73) Proprietor: Panasonic Corporation, Osaka 571-8501 (JP)
(72) Inventor: MIKAMI, Yuichi, Osaka-shi, Osaka 540-6207 (JP); KAMATA, Tomoya, Osaka-shi, Osaka 540-6207 (JP); YAMAUCHI, Kosuke, Osaka-shi, Osaka 540-6207 (JP); KUROHA, Tomohiro, Osaka-shi, Osaka 540-6207 (JP); OKAICHI, Atsuo, Osaka-shi, Osaka 540-6207 (JP)
(74) Representative: Grünecker Patent- und Rechtsanwälte PartG mbB

(56) References cited:
- EP-A1- 2 833 454
- JP-A- 2011 171 021
- US-A1- 2009 092 881

## Description

in an electrochemical device.

### 2. Description of the Related Art

An example of an electrochemical device that includes an electrolyte material formed of a solid oxide is a solid oxide fuel cell. In general, oxide ionic conductors, typically stabilized zirconia, are widely used as electrolyte materials for solid oxide fuel cells. Oxide ionic conductors have lower ionic conductivity at lower temperature. Because of this property, for example, solid oxide fuel cells that include stabilized zirconia as an electrolyte material need to operate at temperatures of 700°C or higher.

However, when electrochemical devices that include an electrolyte material formed of a solid oxide, such as solid oxide fuel cells, operate at high temperatures, an expensive special heat-resistant metal is needed for a metal material used in the structural component. The use of such a metal increases the costs of the entire system and tends to result in cracks when starting and stopping the system because of differences in thermal expansion between the structural components, which causes problems associated with low reliability of the entire system. Therefore, a common practical approach for using electrochemical devices is to lower their operating temperature.

A solid electrolyte stacked body that permits operation at low temperatures and includes a solid electrolyte having proton conductivity has been proposed (e.g., Patent Literature 1, Japanese Unexamined Patent Application Publication No. 2013-206703). Similar solid electrolytes have been described in EP 2833454 A1, US 2009/092881 A1 and JP 2011-171021 A.

More specifically, Patent Literature 1 discloses a solid electrolyte layer stacked body that includes a solid electrolyte layer formed of yttrium-doped barium zirconate (BZY) and a cathode electrode layer formed of a electrode assembly and a solid oxide fuel cell that achieve improved power-generation efficiency.

In one general aspect, the techniques disclosed here feature a membrane electrode assembly that includes an electrode consisting of lanthanum strontium cobalt complex oxide or consisting of a composite of lanthanum strontium cobalt complex oxide and an electrolyte material, and a first solid electrolyte membrane represented by a composition formula of BaZr₁₋ₓYbₓO_{3-δ} (0 < x < 1). The electrode is in contact with the first solid electrolyte membrane.

The membrane electrode assembly according to the present disclosure has the structure described above and has an effect of improving power-generation efficiency.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a schematic diagram illustrating the structure of a membrane electrode assembly according to a first embodiment of the present disclosure;
Fig. 2 is a schematic diagram illustrating the structure of a membrane electrode assembly according to a second embodiment of the present disclosure;
Fig. 3 is a schematic diagram illustrating one example of the structure of a membrane electrode assembly according to a third embodiment of the present disclosure;
Fig. 4 is a schematic diagram illustrating another example of the structure of the membrane electrode assembly according to the third embodiment of the present disclosure;
Fig. 5 is a schematic diagram illustrating the structure of an evaluation membrane electrode assembly according to Examples of the present disclosure;
Fig. 6 is a diagram illustrating an example of the measurement result of the alternating-current impedance according to Examples of the present disclosure by using the Cole-Cole plot;
Fig. 7 illustrates a graph showing an example of the relationship between the IR resistance and the thickness of a first solid electrolyte membrane according to Examples of the present disclosure; and
Fig. 8 illustrates a table showing the contact resistance in Example (Example 1) of the present disclosure and the contact resistance in Comparative Examples (Comparative Examples 1 to 5).

### DETAILED DESCRIPTION

### Underlying Knowledge Forming Basis of the Present Disclosure

The inventors of the present invention have diligently studied the related solid electrolyte layer stacked body (membrane electrode assembly) disclosed in Patent Literature 1. As a result, the following finding has been obtained. That is, the inventors have devised a membrane electrode assembly that provides higher power-generation efficiency than the membrane electrode assembly disclosed in Patent Literature 1 when used in an electrochemical device.

Specifically, the inventors have found that there is a problem in that high power-generation efficiency is not obtained when a membrane electrode assembly in an electrochemical device, as disclosed in Patent Literature 1, includes a combination of an electrode formed of a lanthanum strontium cobalt compound (hereinafter referred to as LSC) and a solid electrolyte membrane represented by BaZr₁₋ₓYₓO_{3-δ}. Therefore, the inventors have diligently studied combinations of an electrode and a solid electrolyte membrane that provide high power-generation efficiency and, as a result, the present disclosure has been made.

First, the inventors have found that a membrane electrode assembly obtained by replacing the solid electrolyte membrane represented by BaZr₁₋ₓYₓO_{3-δ} in the membrane electrode assembly disclosed in Patent Literature 1 with a solid electrolyte membrane represented by BaZr₁₋ₓYbₓO_{3-δ} (0 < x < 1) provides higher power-generation efficiency than the membrane electrode assembly disclosed in Patent Literature 1. This is probably because the contact resistance, which is resistance between the electrode and the solid electrolyte membrane, is lower in the membrane electrode assembly including a combination of an electrode formed of a lanthanum strontium cobalt compound (LSC) and a solid electrolyte membrane represented by BaZr₁₋ₓYbₓO_{3-δ} (0 < x < 1) than in the membrane electrode assembly disclosed in Patent Literature 1. As a result, the membrane electrode assembly including a combination of an electrode formed of a lanthanum strontium cobalt compound (LSC) and a solid electrolyte membrane represented by BaZr₁₋ₓYbₓO_{3-δ} (0 < x < 1) can achieve lower ohmic resistance (IR resistance) of the entire membrane electrode assembly and thus can provide higher power-generation efficiency.

The above-mentioned finding, which was first revealed by the inventors, has novel technical features that enable new challenges to be identified and significant operational advantages to be realized. Specifically, the present disclosure provides the aspects described below.

The membrane electrode assembly according to a first embodiment of the present disclosure includes an electrode formed of lanthanum strontium cobalt complex oxide or formed of a composite of lanthanum strontium cobalt complex oxide and an electrolyte material, and a first solid electrolyte membrane having a composition represented by BaZr₁₋ₓYbₓO_{3-δ} (0 < x < 1). The electrode is in contact with the first solid electrolyte membrane.

In the membrane electrode assembly according to the first aspect of the present disclosure having the above-mentioned structure, the electrode formed of the above-mentioned compound or formed of the compound and an electrolyte material is in contact with the first solid electrolyte membrane having a composition represented by BaZr₁₋ₓYbₓO_{3-δ} (0 < x < 1). This structure can reduce the contact resistance between the electrode and the first solid electrolyte membrane and, as a result, can reduce the resistance of the entire membrane electrode assembly. Therefore, the membrane electrode assembly according to the first aspect of the present disclosure has an effect of improving power-generation efficiency.

In a membrane electrode assembly according to a second aspect of the present disclosure, the membrane electrode assembly in the first aspect may further include a second solid electrolyte membrane having a composition different from the composition of the first solid electrolyte membrane. The first solid electrolyte membrane may have a first surface in contact with the electrode and a second surface, which is a surface opposite to the first surface, in contact with the second solid electrolyte membrane. In the membrane electrode assembly according to the second aspect, the electrode, the first solid electrolyte membrane, and the second solid electrolyte membrane may be stacked in this order.

According to the above-mentioned structure, the solid electrolyte membrane in contact with the electrode is the first solid electrolyte membrane. This structure can reduce the contact resistance between the electrode and the first solid electrolyte membrane. Furthermore, when a solid electrolyte membrane includes a first solid electrolyte membrane and a second solid electrolyte membrane having higher conductivity than the first solid electrolyte membrane, the solid electrolyte membrane has higher conductivity than a solid electrolyte membrane composed of only the first solid electrolyte membrane, provided that these solid electrolyte membranes have the same thickness. Therefore, the membrane electrode assembly according to the second aspect of the present disclosure can improve power-generation efficiency.

In addition, when the solid electrolyte membrane is composed of only the first solid electrolyte membrane and, for example, a member that produces large contact resistance in the interface between the member and BaZrYbO₃ needs to be disposed on the second surface of the first solid electrolyte membrane opposite to the first surface in contact with the electrode, the efficiency of the electrochemical device may deteriorate. However, the membrane electrode assembly according to the second aspect of the present disclosure includes the second solid electrolyte membrane disposed on the second surface of the first solid electrolyte membrane. Therefore, when a member that produces large contact resistance in the interface between the member and BaZrYbO₃ is disposed on the second surface side of the first solid electrolyte membrane, the structure according to the second aspect can prevent the member from being disposed directly on the first solid electrolyte membrane and can suppress decreases in the efficiency of the electrochemical device.

In a membrane electrode assembly according to a third aspect of the present disclosure, the second solid electrolyte membrane in the second aspect may have a composition represented by BaZr₁₋ₓ₁M¹ₓ₁O_{3-δ} where M¹ represents at least one element selected from La, Pr, Nd, Pm, Sm, Eu, Gd, Tb, Dy, Ho, Er, Tm, Yb, Y, Sc, Mn, Fe, Co, Ni, Al, Ga, In, and Lu, and 0 < x₁ < 1.

This structure can prevent or reduce production of large contact resistance in the interface between the second solid electrolyte membrane and the first solid electrolyte membrane. Therefore, the membrane electrode assembly according to the third aspect of the present disclosure can improve power-generation efficiency.

In a membrane electrode assembly according to a fourth aspect of the present disclosure, the electrode in the first aspect may be a cathode electrode, and the membrane electrode assembly in the first aspect may further include an anode electrode containing Ni and a compound represented by any one composition formula selected from BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ} where M², M³, and M⁴ each represent at least one element selected from La, Pr, Nd, Pm, Sm, Eu, Gd, Tb, Dy, Ho, Er, Tm, Yb, Y, Sc, Mn, Fe, Co, Ni, Al, Ga, In, and Lu, 0 < x₂ < 1, 0 < x₃ < 1, 0 < x₄ < 1, and 0 < y₄ < 1. The first solid electrolyte membrane may have a first surface in contact with the cathode electrode and a second surface, which is a surface opposite to the first surface, in contact with the anode electrode. In the membrane electrode assembly according to the fourth aspect, the cathode electrode, the first solid electrolyte membrane, and the anode electrode may be stacked in this order.

According to this structure, the electrode formed of the above-mentioned compound or formed of the compound and an electrolyte material, that is, the cathode electrode is in contact with the first solid electrolyte membrane having a composition represented by BaZr₁₋ₓYbₓO_{3-δ} (0 < x < 1). This structure can reduce the contact resistance between the cathode electrode and the first solid electrolyte membrane and, as a result, can reduce the resistance of the entire membrane electrode assembly including the cathode electrode, the first solid electrolyte membrane, and the anode electrode. Therefore, the membrane electrode assembly according to the fourth aspect of the present disclosure can improve power-generation efficiency.

In a membrane electrode assembly according to a fifth aspect of the present disclosure, the electrode in the second aspect may be a cathode electrode, and the membrane electrode assembly in the second aspect may further include an anode electrode containing Ni and a compound represented by any one composition formula selected from BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ} where M², M³, and M⁴ each represent at least one element selected from La, Pr, Nd, Pm, Sm, Eu, Gd, Tb, Dy, Ho, Er, Tm, Yb, Y, Sc, Mn, Fe, Co, Ni, Al, Ga, In, and Lu, 0 < x₂ < 1, 0 < x₃ < 1, 0 < x₄ < 1, and 0 < y₄ < 1. The second solid electrolyte membrane may have a first surface in contact with the first solid electrolyte membrane and a second surface, which is a surface opposite to the first surface, in contact with the anode electrode. In the membrane electrode assembly according to the fifth aspect, the cathode electrode, the first solid electrolyte membrane, the second solid electrolyte membrane, and the anode electrode may be stacked in this order.

According to this structure, the electrode formed of the above-mentioned compound or formed of the compound and an electrolyte material, that is, the cathode electrode is in contact with the first solid electrolyte membrane having a composition represented by BaZr₁₋ₓYbₓO_{3-δ} (0 < x < 1). This structure can reduce the contact resistance between the cathode electrode and the first solid electrolyte membrane. Furthermore, when a solid electrolyte membrane includes a first solid electrolyte membrane and a second solid electrolyte membrane having higher conductivity than the first solid electrolyte membrane, the solid electrolyte membrane has higher conductivity than a solid electrolyte membrane composed of only the first solid electrolyte membrane, provided that these solid electrolyte membranes have the same thickness.

Therefore, the membrane electrode assembly according to the fifth aspect of the present disclosure achieves low resistance of the entire membrane electrode assembly including the cathode electrode, the first solid electrolyte membrane, the second solid electrolyte membrane, and the anode electrode, and can improve power-generation efficiency.

In a membrane electrode assembly according to a sixth aspect of the present disclosure, the first solid electrolyte membrane in the second aspect may have a thickness equal to or less than the thickness of the second solid electrolyte membrane.

According to this structure, when the solid electrolyte membrane includes the first solid electrolyte membrane and the second solid electrolyte membrane having higher conductivity than the first solid electrolyte membrane, and the first solid electrolyte membrane having relatively low conductivity has a thickness equal to or less than the thickness of the second solid electrolyte membrane having relatively high conductivity, the entire solid electrolyte membrane has high conductivity. Therefore, the membrane electrode assembly according to the sixth aspect of the present disclosure can improve power-generation efficiency.

In a membrane electrode assembly according to a seventh aspect of the present disclosure, the second solid electrolyte membrane in the sixth aspect may be a dense body.

According to this structure, even if the first solid electrolyte membrane has a thickness that is insufficient to maintain gas-tight properties, the dense properties of the second solid electrolyte can provide the entire solid electrolyte with sufficient gas-tight properties,

A solid oxide fuel cell according to an eighth aspect of the present disclosure includes a membrane electrode assembly including an electrode formed of lanthanum strontium cobalt complex oxide or formed of a composite of lanthanum strontium cobalt complex oxide and an electrolyte material, and a first solid electrolyte membrane having a composition represented by BaZr₁₋ₓYbₓO_{3-δ} (0 < x < 1). The electrode is in contact with the first solid electrolyte membrane.

This structure can reduce the resistance of the entire membrane electrode assembly. Therefore, the solid oxide fuel cell according to the eighth aspect of the present disclosure has high power-generation efficiency.

Embodiments of the present disclosure will be described below with reference to the drawings. Hereinafter, the same or corresponding structural components are provided with the same reference symbols throughout the figures, and the description thereof may be omitted.

### First Embodiment

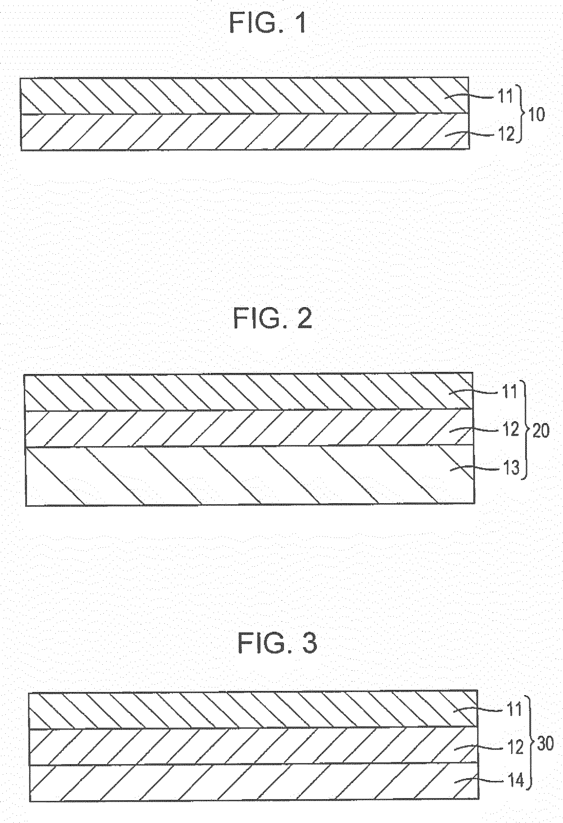

A membrane electrode assembly 10 according to a first embodiment of the present disclosure will be described with reference to Fig. 1. Fig. 1 is a schematic diagram illustrating the structure of the membrane electrode assembly 10 according to the first embodiment of the present disclosure. The membrane electrode assembly 10 is a member used in an electrochemical device. As illustrated in Fig. 1, the membrane electrode assembly 10 includes an electrode 11 and a first solid electrolyte membrane 12. The electrode 11 is in contact with the first solid electrolyte membrane 12. In other words, the membrane electrode assembly 10 has a stacked structure including the electrode 11 and the first solid electrolyte membrane 12 having a first surface in contact with the electrode 11.

The electrode 11 is formed by using lanthanum strontium cobalt complex oxide (LSC). That is, the electrode 11 may be composed of only LSC described above or may be formed of, for example, a composite of LSC and an electrolyte material (e.g., a solid electrolyte material having proton conductivity, such as BaZrYbO₃ or BaZrInO₃). When the electrode 11 is used, for example, as a cathode electrode for a solid oxide fuel cell, the electrochemical reduction reaction of oxygen in a gas phase occurs. Because of this, the electrode 11 may be a porous body to ensure paths through which oxygen diffuses and to promote the reaction.

The first solid electrolyte membrane 12 has a composition represented by BaZr₁₋ₓYbₓO_{3-δ} (0 < x < 1), which has proton conductivity. When the molar ratio of Zr to Yb is, for example, 8:2, barium zirconium ytterbium complex oxide (BaZrYbO₃) has a proton conductivity of about 8.0 x 10⁻³ S/cm at 600°C. When the first solid electrolyte membrane 12 is used as a solid electrolyte membrane of the membrane electrode assembly 10 in an electrochemical device, it is possible to minimize the thickness of the first solid electrolyte membrane 12 in order to reduce the ohmic resistance (IR resistance) of the first solid electrolyte membrane 12.

When an electrochemical device that includes the membrane electrode assembly 10 is, for example, a solid oxide fuel cell, power is produced by supplying air to the first surface of the first solid electrolyte membrane 12 having the electrode 11 and supplying a hydrogen-containing gas to the second surface having no electrode 11. Therefore, when the electrochemical device is a solid oxide fuel cell, the first solid electrolyte membrane 12 needs to be gas-tight.

Since the membrane electrode assembly 10 according to the first embodiment has a structure in which the electrode 11 is stacked on the first surface of the first solid electrolyte membrane 12, the contact resistance, which is resistance between the electrode 11 and the first solid electrolyte membrane 12, is low. This structure can improve the power-generation efficiency of electrochemical devices, such as solid oxide fuel cells.

### Second Embodiment

A membrane electrode assembly 20 according to a second embodiment of the present disclosure will be described with reference to Fig. 2. Fig. 2 is a schematic diagram illustrating the structure of the membrane electrode assembly 20 according to the second embodiment of the present disclosure. The membrane electrode assembly 20 includes an electrode 11, a first solid electrolyte membrane 12, and a second solid electrolyte membrane 13. In the membrane electrode assembly 20, the electrode 11, the first solid electrolyte membrane 12, and the second solid electrolyte membrane 13 are stacked in this order. In other words, the first solid electrolyte membrane 12 has a first surface in contact with the electrode 11 and a second surface, which is a surface opposite to the first surface, in contact with the second solid electrolyte membrane 13. That is, in the membrane electrode assembly 20 according to the second embodiment, the membrane electrode assembly 10 according to the first embodiment further includes a second solid electrolyte membrane 13.

The electrode 11 in the membrane electrode assembly 20 according to the second embodiment is formed by using lanthanum strontium cobalt complex oxide (LSC) as in the first embodiment. The electrode 11 may be composed of only LSC or may be formed of, for example, a composite of LSC and an electrolyte material (e.g., BaZrYbO₃). When the electrode 11 is used, for example, as a cathode electrode for a solid oxide fuel cell, the electrochemical reduction reaction of oxygen in a gas phase occurs, as in the first embodiment. Because of this, the electrode 11 may be a porous body to ensure paths through which oxygen diffuses and to promote the reaction.

Like the first solid electrolyte membrane 12 according to the first embodiment, the first solid electrolyte membrane 12 has a composition represented by BaZr₁₋ₓYbₓO_{3-δ} (0 < x < 1) having proton conductivity. The second solid electrolyte membrane 13 has a composition different from the composition of the first solid electrolyte membrane 12. For example, the second solid electrolyte membrane 13 may be a proton conductor having a composition represented by BaZr₁₋ₓ₁M¹ₓ₁O_{3-δ} where M¹ represents at least one element selected from La, Pr, Nd, Pm, Sm, Eu, Gd, Tb, Dy, Ho, Er, Tm, Yb, Y, Sc, Mn, Fe, Co, Ni, Al, Ga, In, and Lu, and 0 < x₁ < 1. In the membrane electrode assembly 20 according to the second embodiment of the present disclosure, both the first solid electrolyte membrane 12 and the second solid electrolyte membrane 13 may be formed to have a reduced thickness in order to reduce the IR resistance.

When the electrochemical device that includes the membrane electrode assembly 20 is, for example, a solid oxide fuel cell, power is produced in a stacked body including the electrode 11, the first solid electrolyte membrane 12, and the second solid electrolyte membrane 13 by supplying air to the electrode 11 side of the stacked body and a hydrogen-containing gas to the second solid electrolyte membrane 13 side of the stacked body. Since the electrode 11 is preferably a porous body, at least one of the first solid electrolyte membrane 12 and the second solid electrolyte membrane 13 needs to be gas-tight.

In the second embodiment, the solid electrolyte membrane has a stacked structure including the first solid electrolyte membrane 12 and the second solid electrolyte membrane 13. The second solid electrolyte membrane 13 may be a proton conductor having higher proton conductivity than BaZrYbO₃, which is a proton conductor of the first solid electrolyte membrane 12. As the solid electrolyte membrane including a combination of the first solid electrolyte membrane 12 and the second solid electrolyte membrane 13 having higher proton conductivity than the first solid electrolyte membrane 12 is compared with a solid electrolyte membrane composed of the first solid electrolyte membrane 12, the former solid electrolyte membrane has higher proton conductivity than the latter solid electrolyte membrane, provided that these solid electrolyte membranes have the same thickness. To achieve good proton conductivity, it is possible to minimize the thickness of the first solid electrolyte membrane 12 having low proton conductivity. That is, the thickness of the first solid electrolyte membrane 12 may be made equal to or less than the thickness of the second solid electrolyte 13. Even if the first solid electrolyte membrane 12 is too thin to maintain gas-tight properties, the second solid electrolyte membrane 13 can compensate for the gas-tight properties. That is, the gastight properties can be ensured as the entire solid electrolyte membrane by forming the second solid electrolyte membrane 13 as a dense body.

Therefore, the solid electrolyte membrane including a combination of the first solid electrolyte membrane 12 and the second solid electrolyte membrane 13 achieves low IR resistance and has an advantage of improving the power-generation efficiency of the electrochemical device compared with a solid electrolyte membrane composed of the first solid electrolyte membrane 12 having gas-tight properties.

In addition, when the solid electrolyte membrane is composed of the first solid electrolyte membrane 12 and, for example, a member that produces large contact resistance in the interface between the member and BaZrYbO₃ needs to be disposed on the second surface of the first solid electrolyte membrane 12 opposite to the first surface in contact with the electrode 11, the efficiency of the electrochemical device may deteriorate. However, the membrane electrode assembly 20 according to the second embodiment includes the second solid electrolyte membrane 13 disposed on the second surface of the first solid electrolyte membrane 12. Therefore, when a member that produces large contact resistance in the interface between the member and BaZrYbO₃ is disposed on the second surface side of the first solid electrolyte membrane 12, this structure can prevent the member from being disposed directly on the first solid electrolyte membrane 12 and thus can suppress decreases in the efficiency of the electrochemical device.

As described above, the membrane electrode assembly 20 according to the second embodiment has a structure in which the electrode 11, the first solid electrolyte membrane 12, and the second solid electrolyte membrane 13 are stacked in this order. As in the first embodiment, this structure can reduce the contact resistance between the electrode 11 and the first solid electrolyte membrane 12 and can improve the power-generation efficiency of electrochemical devices, such as fuel cells.

### Third Embodiment

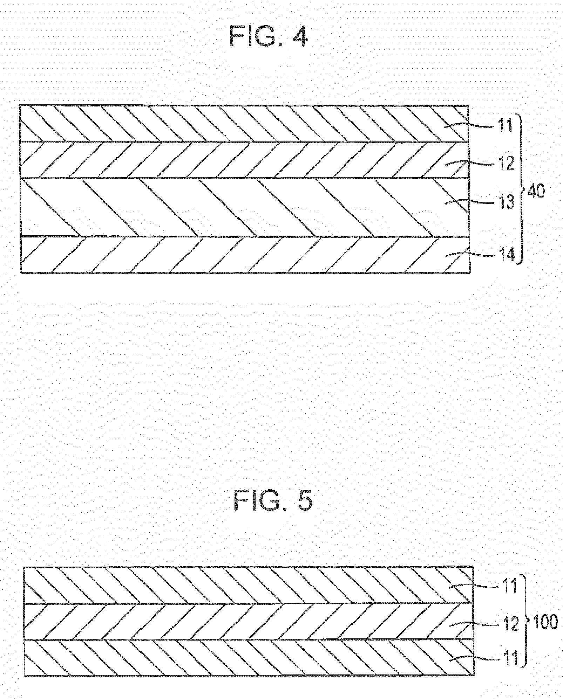

A membrane electrode assembly 30 according to a third embodiment of the present disclosure will be described with reference to Fig. 3 and Fig. 4. Fig. 3 is a schematic diagram illustrating an example of the structure of the membrane electrode assembly 30 according to the third embodiment of the present disclosure. Fig. 4 is a schematic diagram illustrating an example of the structure of a membrane electrode assembly 40 according to the third embodiment of the present disclosure.

As illustrated in Fig. 3, the membrane electrode assembly 30 according to the third embodiment includes an electrode 11, which is a cathode electrode, a first solid electrolyte membrane 12, and an anode electrode 14. In the membrane electrode assembly 30, the electrode 11 (cathode electrode), the first solid electrolyte membrane 12, and the anode electrode 14 are stacked in this order. In other words, in the membrane electrode assembly 30, the first solid electrolyte membrane 12 has a first surface in contact with the electrode 11 (cathode electrode) and a second surface in contact with the anode electrode 14. That is, in the membrane electrode assembly 30 according to the third embodiment, the membrane electrode assembly 10 according to the first embodiment further includes the anode electrode 14. The electrode 11 (cathode electrode) and the first solid electrolyte membrane 12 in the membrane electrode assembly 30 have structures similar to those of the electrode 11 and the first solid electrolyte membrane 12 in the membrane electrode assembly 10 according to the first embodiment, and thus description of these members is omitted. The anode electrode 14 will be described below in detail.

As illustrated in Fig. 4, the membrane electrode assembly 40 according to the third embodiment includes the electrode 11, which is a cathode electrode, the first solid electrolyte membrane 12, a second solid electrolyte membrane 13, and the anode electrode 14. In the membrane electrode assembly 40, the electrode 11 (cathode electrode), the first solid electrolyte membrane 12, the second solid electrolyte membrane 13, and the anode electrode 14 are stacked in this order. In other words, in the membrane electrode assembly 40, the first solid electrolyte membrane 12 has a first surface in contact with the electrode 11 (cathode electrode) and a second surface in contact with the second solid electrolyte membrane 13. The second solid electrolyte membrane 13 has a first surface in contact with the first solid electrolyte membrane and a second surface, which is a surface opposite to the first surface, in contact with the anode electrode 14.

That is, in the membrane electrode assembly 40 according to the third embodiment, the membrane electrode assembly 20 according to the second embodiment further includes the anode electrode 14. In the membrane electrode assembly 40, the electrode 11 (cathode electrode), the first solid electrolyte membrane 12, and the second solid electrolyte membrane 13 have structures similar to those of the electrode 11, the first solid electrolyte membrane 12, and the second solid electrolyte membrane 13 in the membrane electrode assembly 20 according to the second embodiment, and thus description of these members is omitted.

The anode electrode 14 may contain, for example, Ni and a compound having proton conductivity and represented by any one composition formula selected from BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ} where M², M³, and M⁴ each represent at least one element selected from La, Pr, Nd, Pm, Sm, Eu, Gd, Tb, Dy, Ho, Er, Tm, Yb, Y, Sc, Mn, Fe, Co, Ni, Al, Ga, In, and Lu, 0 < x₂ < 1, 0 < x₃ < 1, 0 < x₄ < 1, and 0 < y₄ < 1.

When the anode electrode 14 is used as, for example, an anode electrode in a solid oxide fuel cell, the oxidation reaction of hydrogen in a gas phase into protons occurs in the anode electrode 14. Because of this, the anode electrode 14 may be formed of a composite of Ni having electron conductivity and a hydrogen-oxidizing activity and the compound having proton conductivity in order to promote the oxidation reaction of hydrogen into protons. The anode electrode 14 may be a porous body to ensure paths through which hydrogen gas diffuses.

As described above, the membrane electrode assembly 30 according to the third embodiment has a structure in which the electrode 11, the first solid electrolyte membrane 12, and the anode electrode 14 are stacked in this order. As in the first embodiment, this structure can reduce the contact resistance between the electrode 11 and the first solid electrolyte membrane 12 and can improve the power-generation efficiency of electrochemical devices, such as fuel cells. Similarly, the membrane electrode assembly 40 according to the third embodiment has a structure in which the electrode 11, the first solid electrolyte membrane 12, the second solid electrolyte membrane 13, and the anode electrode 14 are stacked in this order. As in the first and second embodiments, this structure can reduce the contact resistance between the electrode 11 and the first solid electrolyte membrane 12 and can improve the power-generation efficiency of electrochemical devices, such as fuel cells.

### Examples

Next, the following description will provide, as Examples, the evaluation method for concluding that the power-generation efficiency is high when the membrane electrode assemblies 10, 20, 30, and 40 according to the first, second, and third embodiments include a combination of the electrode formed by using LSC and the first solid electrolyte membrane 12 having a composition represented by BaZr₁₋ₓYbₓO_{3-δ} (0 < x < 1). The present disclosure is not limited to the Examples described below.

First, an evaluation membrane electrode assembly 100 illustrated in Fig. 5 was prepared in order to carry out this evaluation method. Fig. 5 is a schematic diagram illustrating the structure of the evaluation membrane electrode assembly 100 according to Examples of the present disclosure. This evaluation membrane electrode assembly 100 was subjected to electrochemical measurement. The evaluation membrane electrode assembly 100 illustrated in Fig. 5 includes two electrodes 11 and a first solid electrolyte membrane 12. The first solid electrolyte membrane 12 has a first surface in contact with one of the electrodes 11 and a second surface, which is a surface opposite to the first surface, in contact with the other one of the electrodes 11. In the evaluation membrane electrode assembly 100, the electrode 11, the first solid electrolyte membrane 12, and the electrode 11 are stacked in this order.

The inventors studied the power-generation efficiency when, other than LSC, any one of lanthanum strontium cobalt ferrite complex oxide (hereinafter referred to as LSCF) and lanthanum strontium ferrite complex oxide (hereinafter referred to as LSF), which have often been reported as cathode materials, was used in the electrode as an oxide ion-electron mixed conductor for forming the electrode 11. LSC having a typical composition of La_{0.6}Sr_{0.4}CoO_{3-δ}, LSCF having a typical composition of La_{0.6}Sr_{0.4}Cu_{0.2}Fe_{0.8}O_{3-δ}, and LSF having a typical composition of La_{0.6}Sr_{0.4}FeO_{3-δ} were used.

BaZrYbO₃ having a typical composition of BaZr_{0.8}Yb_{0.2}O_{2.90} was used to form the first solid electrolyte membrane 12. The cases where the first solid electrolyte membrane 12 was formed of BaZrYO₃, which was another example of the solid electrolyte having proton conductivity, were also added to evaluation targets. BaZrYO₃ having a typical composition of BaZr_{0.8}Y_{0.2}O_{2.90} was used.

As described below, six evaluation membrane electrode assemblies in Example 1 and Comparative Examples 1 to 5 were prepared as evaluation targets. [Example 1] Evaluation membrane electrode assembly 100 including electrode 11 formed of La_{0.6}Sr_{0.4}CoO_{3-δ} and first solid electrolyte membrane 12 formed of BaZr_{0.8}Yb_{0.2}O_{2.90}
[Comparative Example 1] Evaluation membrane electrode assembly 100 including electrode 11 formed of La_{0.6}Sr_{0.4}Co_{0.2}Fe_{0.8}O_{3-δ} and first solid electrolyte membrane 12 formed of BaZr_{0.8}Yb_{0.2}O_{2.90}
[Comparative Example 2] Evaluation membrane electrode assembly 100 including electrode 11 formed of La_{0.6}Sr_{0.4}FeO_{3-δ} and first solid electrolyte membrane 12 formed of BaZr_{0.8}Yb_{0.2}O_{2.90}
[Comparative Example 3] Evaluation membrane electrode assembly 100 including electrode 11 formed of La_{0.6}Sr_{0.4}CoO_{3-δ} and first solid electrolyte membrane 12 formed of BaZr_{0.3}Y_{0.2}O_{2.90}
[Comparative Example 4] Evaluation membrane electrode assembly 100 including electrode 11 formed of La_{0.6}Sr_{0.4}Co_{0.2}Fe_{0.8}O_{3-δ} and first solid electrolyte membrane 12 formed of BaZr_{0.8}Y_{0.2}O_{2.90}
[Comparative Example 5] Evaluation membrane electrode assembly 100 including electrode 11 formed of La_{0.6}Sr_{0.4}FeO_{3-δ} and first solid electrolyte membrane 12 formed of BaZr_{0.8}Y_{0.2}O_{2.90}

### Production of Evaluation Membrane Electrode Assembly

Hereinafter, a method for producing evaluation membrane electrode assemblies 100 in Example 1 and Comparative Examples 1 to 5 will be described.

BaZr_{0.8}Yb_{0.2}O_{2.90} to form the first solid electrolyte membrane 12 was prepared by a citric acid complex method using a powder of Ba(NO₃)₂ (available from Kanto Chemical Co., Inc.), a powder of ZrO(NO₃)₂·2H₂O (available from Kanto Chemical Co., Inc.), and a powder of Yb(NO₃)₃·3H₂O (available from Kojundo Chemical Laboratory Co., Ltd.) as starting materials. In the preparation of BaZr_{0.8}Y_{0.2}O_{2.90}, Y(NO₃)₃·6H₂O (available from Kojundo Chemical Laboratory Co., Ltd.) was used as a starting material instead of Yb(NO₃)₃·3H₂O.

A predetermined amount of each powder was dissolved in distilled water, and 1.0 equivalent of citric acid monohydrate (available from Kanto Chemical Co., Inc.) and 0.7 equivalents of ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the resulting powder was press-molded in a cylindrical shape and calcined at 1200°C for 10 hours. After calcination, the roughly ground powder was placed in a plastic container together with zirconia balls, and ethanol was added, followed by grinding with a ball mill for 3 days or longer.

After grinding with the ball mill, the solvent was removed by lamp drying, and the obtained powder was vacuum-dried at 200°C. After vacuum drying, the powder was formed into pellets by cold isostatic pressing at a press pressure of 200 MPa and fired at 1750°C for 24 hours to obtain a sintered product. Then, the obtained sintered product was machined into a disk shape, and the surface of the disk-shaped product was polished with a wrapping film sheet coated with 3-µm abrasive grains to obtain a first solid electrolyte membrane 12.

La_{0.6}Sr_{0.4}CoO_{3-δ} to form the electrode 11 in Example 1 and Comparative Example 3 was prepared by a citric acid complex method using a powder of La(NO₃)₃·6H₂O (available from Kanto Chemical Co., Inc.), a power of Sr(NO₃)₂ (available from Kanto Chemical Co., Inc.), and a power of Co(NO₃)₂·6H₂O (available from Kanto Chemical Co., Inc.) as starting materials. A predetermined amount of each powder was dissolved in distilled water, and 1.0 equivalent of citric acid monohydrate (available from Kanto Chemical Co., Inc.) and 0.7 equivalents of ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the obtained powder was calcined at 850°C for 5 hours. After calcination, the roughly ground powder was placed in a plastic container together with zirconia balls, and polyethylene glycol 400 (available from Wako Pure Chemical Industries) and isopropyl alcohol were added, followed by grinding with a ball mill for 24 hours or longer.

After grinding with the ball mill, isopropyl alcohol was removed by heating to 120°C with a hotplate stirrer to obtain a slurry of La_{0.6}Sr_{0.4}CoO_{3-δ}.

La_{0.6}Sr_{0.4}Co_{0.2}Fe_{0.8}O_{3-δ} to form the electrode 11 in Example 1 and Comparative Example 4 was prepared by a citric acid complex method using a powder of La(NO₃)₃·6H₂O (available from Kanto Chemical Co., Inc.), a power of Sr(NO₃)₂ (available from Kanto Chemical Co., Inc.), a power of Co(NO₃)₂·6H₂O (available from Kanto Chemical Co., Inc.), and a powder of Fe(NO₃)₃·9H₂O (available from Kanto Chemical Co., Inc.) as starting materials. A predetermined amount of each powder was dissolved in distilled water, and 1.0 equivalent of citric acid monohydrate (available from Kanto Chemical Co., Inc.) and 0.7 equivalents of ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the obtained powder was calcined at 850°C for 5 hours. After calcination, the roughly ground powder was placed in a plastic container together with zirconia balls, and polyethylene glycol 400 (available from Wako Pure Chemical Industries) and isopropyl alcohol were added, followed by grinding with a ball mill for 24 hours or longer. After grinding with the ball mill, isopropyl alcohol was removed by heating to 120°C with a hotplate stirrer to obtain a slurry of La_{0.6}Sr_{0.4}Co_{0.2}Fe_{0.8}O_{3-δ}.

La_{0.6}Sr_{0.4}FeO_{3-δ} to form the electrode 11 in Comparative Example 2 and Comparative Example 5 was prepared by a citric acid complex method using a powder of La(NO₃)₃·6H₂O (available from Kanto Chemical Co., Inc.), a power of Sr(NO₃)₂ (available from Kanto Chemical Co., Inc.), and a power of Fe(NO₃)₃·9H₂O (available from Kanto Chemical Co., Inc.) as starting materials. A predetermined amount of each powder was dissolved in distilled water, and 1.0 equivalent of citric acid monohydrate (available from Kanto Chemical Co., Inc.) and 0.7 equivalents of ethylenediaminetetraacetic acid (EDTA) (available from Kanto Chemical Co., Inc.) based on the metal cations were added. The pH was then adjusted to 7 by using ammonia water (28%) (available from Kanto Chemical Co., Inc.). After pH adjustment, the solvent was removed at 90°C by using a hotplate stirrer. The obtained solid was ground with a mortar, followed by degreasing at about 600°C.

After degreasing, the obtained powder was calcined at 850°C for 5 hours. After calcination, the roughly ground powder was placed in a plastic container together with zirconia balls, and polyethylene glycol 400 (available from Wako Pure Chemical Industries) and isopropyl alcohol were added, followed by grinding with a ball mill for 24 hours or longer. After grinding with the ball mill, isopropyl alcohol was removed by heating to 120°C with a hotplate stirrer to obtain a slurry of La_{0.6}Sr_{0.4}FeO_{3-δ}.

As described above, the first solid electrolyte membranes 12 and the electrodes 11 for use in Example 1 and Comparative Examples 1 to 5 were produced. The slurry for the electrode 11 was then applied to both sides of the first solid electrolyte membrane 12 by screen printing. The coating area for the electrode 11 was 0.785 cm². The electrode 11 was baked on the first solid electrolyte membrane 12 by firing at 950°C for 2 hours. This process provided an evaluation membrane electrode assembly 100.

### Measurement of Contact Resistance

Next, a method for measuring the contact resistance between the electrode 11 and the first solid electrolyte membrane 12 in the evaluation membrane electrode assembly 100 produced by the above-mentioned production method will be described.

The contact resistance between the electrode 11 and the first solid electrolyte membrane 12 in the evaluation membrane electrode assembly 100 was measured by an alternating-current impedance method. Furthermore, various evaluation membrane electrode assemblies 100 each including the first solid electrolyte membrane 12 having a different thickness in Example 1 and Comparative Examples 1 to 5 were prepared, and the contact resistance in these evaluation membrane electrode assemblies 100 was measured. The thickness of the first solid electrolyte membrane 12 was in the range from about 250 µm to about 1000 µm.

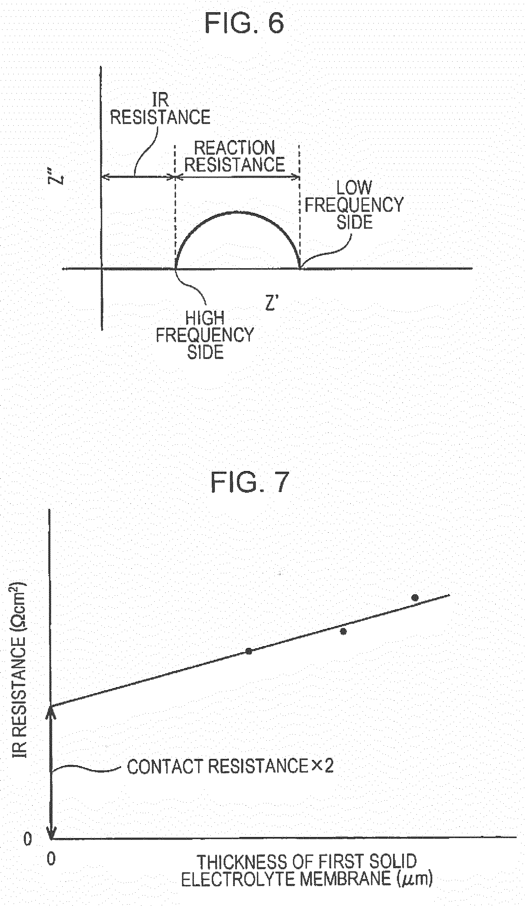

The alternating-current impedance was measured at 600°C in a 20°C humidified air atmosphere. Alternating current was applied by using model 1287, available from Solartron Metrology, at an amplitude of 10 mV and frequencies from 100 kHz to 0.01 Hz. Fig. 6 illustrates the measurement result of the alternating-current impedance based on the Cole-Cole plot where the horizontal axis represents real component Z' of impedance Z (= Z' + jZ") and the vertical axis represents imaginary component Z". Fig. 6 is a figure illustrating an example of the measurement result of the alternating-current impedance according to Examples of the present disclosure by using the Cole-Cole plot. Fig. 6 schematically illustrates the details of the resistance based on the measurement of the alternating-current impedance, With regard to the arc in the range of frequencies from about 1000 Hz to about 0.01 Hz in the Cole-Cole plot, the intersection of the arc and the axis of the real component (Z') on the high frequency side indicates the IR resistance, and the length of the chord formed by the arc and the axis of the real component, that is, the distance between two intersections of the arc and the axis of the real component indicates the reaction resistance. The IR resistance includes the electrolyte resistance, which is the resistance of the first solid electrolyte membrane 12 itself, and the contact resistance, which is the resistance between the first solid electrolyte membrane 12 and the electrode 11. The IR resistance also includes the electrode resistance, which is the resistance of the electrode 11 itself, but the electrode resistance is negligible.

The electrolyte resistance increases in proportion to the thickness of the first solid electrolyte membrane 12, while the contact resistance is not affected by the thickness of the first solid electrolyte membrane 12. Therefore, the IR resistances of the first solid electrolyte membranes 12 having different thicknesses were measured to determine the relationship between the IR resistance and the thickness. Specifically, the relationship between the thickness of the first solid electrolyte membrane 12 and the IR resistance was approximated by a linear function using the method of least squares. In this case, the relationship between the thickness of the first solid electrolyte membrane 12 and the IR resistance is, for example, the relationship as illustrated in Fig. 7. Fig. 7 illustrates a graph showing an example of the relationship between the IR resistance and the thickness of the first solid electrolyte membrane 12 according to Examples of the present disclosure. In Fig. 7, the horizontal axis represents the thickness (µm) of the first solid electrolyte membrane 12, and the vertical axis represents the IR resistance (Ωcm²). The IR resistance when the thickness of the first solid electrolyte membrane 12 is equivalent to zero is defined as the sum of the contact resistance between the first surface of the first solid electrolyte membrane 12 and the electrode 11 disposed on the first surface and the contact resistance between the second surface of the first solid electrolyte membrane 12 and the electrode 11 disposed on the second surface. Therefore, half of the IR resistance when the thickness of the first solid electrolyte membrane 12 is equivalent to zero is taken as the contact resistance between the electrode 11 and the first solid electrolyte membrane 12.

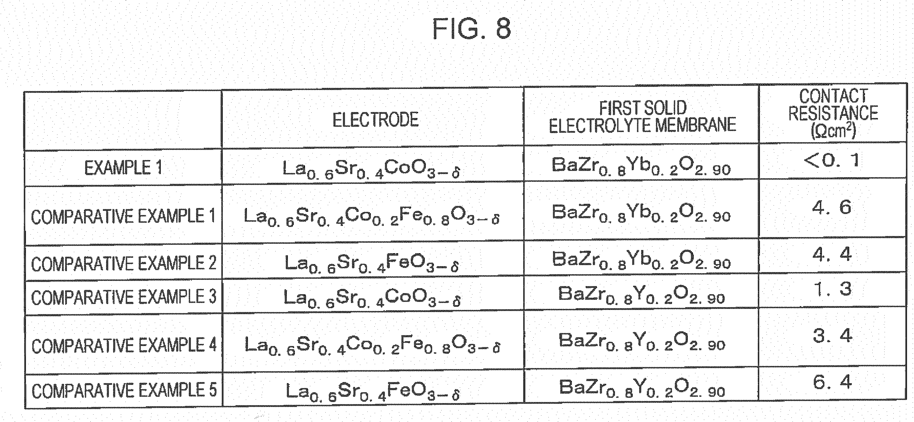

The results obtained by the method for measuring the contact resistance are shown in Table of Fig. 8. Fig. 8 illustrates the table showing the contact resistance in Example (Example 1) of the present disclosure and the contact resistance in Comparative Examples (Comparative Examples 1 to 5). Fig. 8 shows that, in Example 1, where La_{0.6}Sr_{0.4}CoO_{3-δ} was used for the electrode 11 and BaZr_{0.8}Yb_{0.2}O_{2.90} was used for the first solid electrolyte membrane 12, the contact resistance was as low as 0.1 Ωcm² or less. It is also found that the contact resistance in Comparative Examples 1 to 5 was 1.3 or more, which was larger than that in Example 1.

A low contact resistance results in a low IR resistance in the membrane electrode assembly. Therefore, when the membrane electrode assembly including a combination of the electrode 11 described in Example 1 and the first solid electrolyte membrane 12 is used, for example, in a solid oxide fuel cell, the power-generation efficiency is high.

As a result, in the membrane electrode assembly 10 according to the first embodiment, the membrane electrode assembly 20 according to the second embodiment, and the membrane electrode assemblies 30 and 40 according to the third embodiment, the contact resistance, which is resistance between the electrode 11 and the first solid electrolyte membrane 12, is low. A low contact resistance can lead to improved power-generation efficiency of electrochemical devices, such as solid oxide fuel cells.

The detailed reason for differences in contact resistance is not clear. However, the differences in contact resistance imply that the diffusion behavior of cations in the interface between the electrode 11 and the first solid electrolyte membrane 12, or a change in IR resistance due to the diffusion behavior differs greatly depending on the type of cations in the electrode 11 and the first solid electrolyte membrane 12.

In Example 1 described above, the case where the electrode 11 was formed of LSC was evaluated. However, even when the electrode 11 is formed of, for example, a composite of LSC and BaZrYbO₃, the contact resistance is low similarly.

In Examples, the electrode 11 and the first solid electrolyte membrane 12 were synthesized by using the citric acid complex method, but the synthesis method is not limited to this method. For example, the oxides may be synthesized by a solid phase sintering method, a coprecipitation method, a nitrate method, a spray granulation method, or other methods.

In the method for producing the evaluation membrane electrode assembly 100 in Examples, the evaluation membrane electrode assembly 100 is produced as follows: obtaining the first solid electrolyte membrane 12 from the sintered product of BaZrYbO₃; and then applying the slurry for the electrode 11 to the first solid electrolyte membrane 12 by screen printing, followed by baking. However, the production method is not limited to this method. For example, the evaluation membrane electrode assembly 100 may be produced by, for example, a method involving stacking, as powders, BaZrYbO₃ and the second solid electrolyte membrane 13 or, for example, a composite of Ni and BaZrYbO₃, or stacking them by using green sheets, followed by co-sintering. The electrode 11 is not necessarily formed by screen printing and may be formed by sheet molding, spin coating, or other methods.

These are not limited to a sintering method, and a deposition method, such as a CVD method or a sputtering method, may be employed. Thermal spraying may be used for production.

The membrane electrode assembly 10 of the present disclosure can be used in applications of electrochemical devices, such as fuel cells, gas sensors, hydrogen pumps, and water electrolysis devices.

It will be apparent to those skilled in the art from the above description that the present disclosure includes many modifications and other embodiments. The above description should be considered illustrative only and is provided for the purpose of teaching those skilled in the art the best modes for carrying out the present disclosure. The details of the structure and/or function of the present disclosure can be drawn from the present disclosure.

The membrane electrode assembly according to the present disclosure can be used in applications of electrochemical devices, such as fuel cells, gas sensors, hydrogen pumps, and water electrolysis devices.

## Claims

1. A membrane electrode assembly comprising:
an electrode consisting of lanthanum strontium cobalt complex oxide or consisting of a composite of lanthanum strontium cobalt complex oxide and an electrolyte material; and
a first solid electrolyte membrane represented by a composition formula of BaZr₁₋ₓYbₓO_{3-δ} (0 < x < 1),
wherein the electrode is in contact with the first solid electrolyte membrane.

2. The membrane electrode assembly according to Claim 1, further comprising a second solid electrolyte membrane having a composition different from the composition of the first solid electrolyte membrane,
wherein the first solid electrolyte membrane has a first surface in contact with the electrode and a second surface, which is a surface opposite to the first surface, in contact with the second solid electrolyte membrane, and
wherein the electrode, the first solid electrolyte membrane, and the second solid electrolyte membrane are stacked in this order.

3. The membrane electrode assembly according to Claim 2, wherein the second solid electrolyte membrane is represented by a composition formula of BaZr₁₋ₓ₁M¹ₓ₁O_{3-δ},
where M¹ represents at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, and x₁ satisfies 0 < x₁ < 1.

4. The membrane electrode assembly according to Claim 1, wherein the electrode is a cathode electrode, and
the membrane electrode assembly further includes an anode electrode containing Ni and a compound represented by any one composition formula selected from the group consisting of BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ},
where M², M³, and M⁴ each represent at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, x₂, x₃, x₄, and y₄ each satisfies 0 < x₂ < 1, 0 < x₃ < 1, 0 < x₄ < 1, and 0 < y₄ < 1,
the first solid electrolyte membrane has a first surface in contact with the cathode electrode and a second surface, which is a surface opposite to the first surface, in contact with the anode electrode, and
the cathode electrode, the first solid electrolyte membrane, and the anode electrode are stacked in this order.

5. The membrane electrode assembly according to Claim 2, wherein the electrode is a cathode electrode, and
the membrane electrode assembly further includes an anode electrode containing Ni and a compound represented by any one composition formula selected from the group consisting of BaZr₁₋ₓ₂M²ₓ₂O_{3-δ}, BaCe₁₋ₓ₃M³ₓ₃O_{3-δ}, and BaZr_{1-x4-y4}Ceₓ₄M⁴_{y4}O_{3-δ},
where M², M³, and M⁴ each represent at least one element selected from the group consisting of La, Pr, Nd, Pm, Sm, Eu, Gd, Tb, Dy, Ho, Er, Tm, Yb, Y, Sc, Mn, Fe, Co, Ni, Al, Ga, In, and Lu, x₂, x₃, x₄, and y₄ each satisfies 0 < x₂ < 1, 0 < x₃ < 1, 0 < x₄ < 1, and 0 < y₄ < 1,
the second solid electrolyte membrane has a first surface in contact with the first solid electrolyte membrane and a second surface, which is a surface opposite to the first surface, in contact with the anode electrode, and
the cathode electrode, the first solid electrolyte membrane, the second solid electrolyte membrane, and the anode electrode are stacked in this order.

6. The membrane electrode assembly according to Claim 2, wherein the first solid electrolyte membrane has a thickness equal to or less than a thickness of the second solid electrolyte membrane.

7. The membrane electrode assembly according to Claim 6, wherein the second solid electrolyte membrane is a dense body.

8. A solid oxide fuel cell comprising a membrane electrode assembly including:
an electrode consisting of lanthanum strontium cobalt complex oxide or consisting of a composite of lanthanum strontium cobalt complex oxide and an electrolyte material; and
a first solid electrolyte membrane represented by a composition formula of BaZr₁₋ₓYbₓO_{3-δ} (0 < x < 1),
wherein the electrode is in contact with the first solid electrolyte membrane.

## Patentansprüche

1. Membran-Elektroden-Einheit, die umfasst:
eine Elektrode, die aus komplexem Lanthan-Strontium-Cobalt-Oxid besteht oder aus einer Verbindung aus komplexem Lanthan-Strontium-Cobalt-Oxid und einem Elektrolyt-Material besteht; sowie
eine erste Festelektrolyt-Membran, die durch eine Zusammensetzungsformel BaZr₁₋ₓYbₓO_{3-δ} (0 < x < 1) repräsentiert wird,
wobei die Elektrode in Kontakt mit der ersten Festelektrolyt-Membran ist.

2. Membran-Elektroden-Einheit nach Anspruch 1, die des Weiteren eine zweite Festelektrolyt-Membran umfasst, die eine Zusammensetzung hat, die sich von der Zusammensetzung der ersten Festelektrolyt-Membran unterscheidet,
wobei die erste Festelektrolyt-Membran eine erste Fläche, die in Kontakt mit der Elektrode ist, und eine zweite Fläche hat, die eine der ersten Fläche gegenüberliegende Fläche ist und in Kontakt mit der zweiten Festelektrolyt-Membran ist, und
die Elektrode, die erste Festelektrolyt-Membran sowie die zweite Festelektrolyt-Membran in dieser Reihenfolge übereinandergeschichtet sind.

3. Membran-Elektroden-Einheit nach Anspruch 2, wobei die zweite Festelektrolyt-Membran durch eine Zusammensetzungsformel BaZr₁₋ₓ₁M¹ₓ₁O_{3-δ} repräsentiert wird,
und dabei M¹ wenigstens ein Element repräsentiert, das aus der Gruppe ausgewählt wird, die aus La, Pr, Nd, Pm, Sm, Eu, Gd, Tb, Dy, Ho, Er, Tm, Yb, Y, Sc, Mn, Fe, Co, Ni, Al, Ga, In sowie Lu besteht, und für x₁ 0 < x₁ < 1 gilt.

4. Membran-Elektroden-Einheit nach Anspruch 1, wobei die Elektrode eine Kathoden-Elektrode ist, und
die Membran-Elektroden-Einheit des Weiteren eine Anoden-Elektrode umfasst, die Ni sowie eine Verbindung enthält, die durch eine beliebige Zusammensetzungsformel repräsentiert wird, die aus der Gruppe ausgewählt wird, die aus BaZr₁₋ₓ₂M²ₓ₂O_{3-δ}, BaCe₁₋ₓ₃M³ₓ₃O_{3-δ} und BaZr_{1-x4-y4}Ceₓ₄M⁴_{y4}O_{3-δ} besteht,
und dabei M², M³ und M⁴ jeweils wenigstens ein Element repräsentieren, das aus der Gruppe ausgewählt wird, die aus La, Pr, Nd, Pm, Sm, Eu, Gd, Tb, Dy, Ho, Er, Tm, Yb, Y, Sc, Mn, Fe, Co, Ni, Al, Ga, In sowie Lu besteht, und für x₂, x₃, x₄, sowie y₄ jeweils 0 < x₂ < 1, 0 < x₃ < 1, 0 < x₄ < 1 und 0 < y₄ < 1 gelten,
die erste Festelektrolyt-Membran eine erste Fläche, die in Kontakt mit der Kathoden-Elektrode ist, und eine zweite Fläche hat, die eine der ersten Fläche gegenüberliegende Fläche ist und in Kontakt mit der Anoden-Elektrode ist, und
die Kathoden-Elektrode, die erste Festelektrolyt-Membran und die Anoden-Elektrode in dieser Reihenfolge übereinandergeschichtet sind.

5. Membran-Elektroden-Einheit nach Anspruch 2, wobei die Elektrode eine Kathoden-Elektrode ist, und
die Membran-Elektroden-Einheit des Weiteren eine Anoden-Elektrode umfasst, die Ni sowie eine Verbindung enthält, die durch eine beliebige Zusammensetzungsformel repräsentiert wird, die aus der Gruppe ausgewählt wird, die aus BaZr₁₋ₓ₂M²ₓ₂O_{3-δ}, BaCe₁₋ₓ₃M³ₓ₃O_{3-δ} und BaZr_{1-x4-y4}Ceₓ₄M⁴_{y4}O_{3-δ} besteht,
und dabei M², M³ und M⁴ jeweils wenigstens ein Element repräsentieren, das aus der Gruppe ausgewählt wird, die aus La, Pr, Nd, Pm, Sm, Eu, Gd, Tb, Dy, Ho, Er, Tm, Yb, Y, Sc, Mn, Fe, Co, Ni, Al, Ga, In sowie Lu besteht, und für x₂, x₃, x₄, sowie y₄ jeweils 0 < x₂ < 1, 0 < x₃ < 1, 0 < x₄ < 1 und 0 < y₄ < 1 gelten,
die zweite Festelektrolyt-Membran eine erste Fläche, die in Kontakt mit der ersten Festelektrolyt-Membran ist, und eine zweite Fläche hat, die eine der ersten Fläche gegenüberliegende Fläche ist und in Kontakt mit der Anoden-Elektrode ist, und
die Kathoden-Elektrode, die erste Festelektrolyt-Membran, die zweite Festelektrolyt-Membran und die Anoden-Elektrode in dieser Reihenfolge übereinandergeschichtet sind.

6. Membran-Elektroden-Einheit nach Anspruch 2, wobei die erste Festelektrolyt-Membran eine Dicke hat, die genauso groß ist wie oder kleiner als eine Dicke der zweiten Festelektrolyt-Membran.

7. Membran-Elektroden-Einheit nach Anspruch 6, wobei die zweite Festelektrolyt-Membran ein dichter Körper ist.

8. Festoxid-Brennstoffzelle, die eine Membran-Elektroden-Einheit umfasst, die enthält:
eine Elektrode, die aus komplexem Lanthan-Strontium-Cobalt-Oxid besteht oder aus einer Verbindung aus komplexem Lanthan-Strontium-Cobalt-Oxid und einem Elektrolyt-Material besteht; sowie
eine erste Festelektrolyt-Membran, die durch eine Zusammensetzungsformel BaZr₁₋ₓYbₓO_{3-δ} (0 < x < 1) repräsentiert wird,
wobei die Elektrode in Kontakt mit der ersten Festelektrolyt-Membran ist.

## Revendications

1. Ensemble d'électrode à membrane, comprenant :
une électrode constituée d'un oxyde complexe de lanthane-strontium-cobalt ou constituée d'un composite d'oxyde complexe de lanthane-strontium-cobalt et d'un matériau d'électrolyte ; et
une première membrane d'électrolyte solide représentée par une formule de composition BaZr₁₋ₓYbₓO_{3-δ}, (0 < x <1),
dans lequel l'électrode est en contact avec la première membrane d'électrolyte solide.

2. Ensemble d'électrode à membrane selon la revendication 1, comprenant en outre une seconde membrane d'électrolyte solide ayant une composition différente de la composition de la première membrane d'électrolyte solide,
dans lequel la première membrane d'électrolyte solide a une première surface en contact avec l'électrode et une seconde surface, qui est une surface opposée à la première surface, en contact avec la seconde membrane d'électrolyte solide, et dans lequel l'électrode, la première membrane d'électrolyte solide et la seconde membrane d'électrolyte solide sont empilées dans cet ordre.

3. Ensemble d'électrode à membrane selon la revendication 2, dans lequel la seconde membrane d'électrolyte solide est représentée par une formule de composition de BaZr₁₋ₓ₁M¹ₓ₁O_{3-δ},
où M1 représente au moins un élément choisi dans le groupe constitué de La, Pr, Nd, Pm, Sm, Eu, Gd, Tb, Dy, Ho, Er, Tm, Yb, Y, Sc, Mn, Fe, Co, Ni, Al, Ga, In et Lu, et x₁ satisfait 0 <x₁ <1.

4. Ensemble d'électrode à membrane selon la revendication 1, dans lequel l'électrode est une électrode cathodique, et
l'ensemble d'électrode à membrane comprend en outre une électrode anodique contenant Ni et un composé représenté par une quelconque formule de composition choisie dans le groupe constitué de BaZr₁₋ₓ₂M²ₓ₂O_{3-δ}, BaCe₁₋ₓ₃M³ₓ₃O_{3-δ}, et BaZr_{1-x4-y4}Ceₓ₄M⁴_{y4}O_{3-δ},
où M², M³ et M⁴ représentent chacun au moins un élément choisi dans le groupe constitué de La, Pr, Nd, Pm, Sm, Eu, Gd, Tb, Dy, Ho, Er, Tm, Yb, Y, Sc, Mn, Fe, Co, Ni, Al, Ga, In et Lu, x₂, x₃, x₄ et y₄ satisfont chacun 0 < x₂ <1, 0 < x₃ < 1, 0 <x₄ <1 et0 < y₄ <1,
la première membrane d'électrolyte solide a une première surface en contact avec l'électrode cathodique et une seconde surface, qui est une surface opposée à la première surface, en contact avec l'électrode anodique, et
l'électrode cathodique, la première membrane d'électrolyte solide et l'électrode anodique sont empilées dans cet ordre.

5. Ensemble d'électrode à membrane selon la revendication 2, dans lequel l'électrode est une électrode cathodique, et
l'ensemble d'électrode à membrane comprend en outre une électrode anodique contenant Ni et un composé représenté par une quelconque formule de composition choisie dans le groupe constitué de BaZr₁₋ₓ₂M²ₓ₂O_{3-δ}, BaCe₁₋ₓ₃M³ₓ₃O_{3-δ}, et BaZr_{1-x4-y4}Ceₓ₄M⁴_{y4}O_{3-δ},
où M², M³ et M⁴ représentent chacun au moins un élément choisi dans le groupe constitué de La, Pr, Nd, Pm, Sm, Eu, Gd, Tb, Dy, Ho, Er, Tm, Yb, Y, Sc, Mn, Fe, Co, Ni, Al, Ga, In et Lu, x₂, x₃, x₄ et y₄ satisfont chacun 0 < x₂ <1, 0 < x₃ <1, 0 < x₄ <1 et 0 < y₄ <1,
la seconde membrane d'électrolyte solide a une première surface en contact avec la première membrane d'électrolyte solide et une seconde surface, qui est une surface opposée à la première surface, en contact avec l'électrode anodique, et
l'électrode cathodique, la première membrane d'électrolyte solide, la seconde membrane d'électrolyte solide et l'électrode anodique sont empilées dans cet ordre.

6. Ensemble d'électrode à membrane selon la revendication 2, dans lequel la première membrane d'électrolyte solide a une épaisseur égale ou inférieure à une épaisseur de la seconde membrane d'électrolyte solide.

7. Ensemble d'électrode à membrane selon la revendication 6, dans lequel la seconde membrane d'électrolyte solide est un corps dense.

8. Pile à combustible à oxyde solide comprenant un ensemble d'électrode à membrane comprenant :
une électrode constituée d'oxyde complexe de lanthane-strontium-cobalt ou constituée d'un composite d'oxyde complexe de lanthane-strontium-cobalt et d'un matériau d'électrolyte ; et
une première membrane d'électrolyte solide représentée par une formule de composition BaZr₁₋ₓYbₓO_{3-δ} ; (0 <x <1),
dans lequel l'électrode est en contact avec la première membrane d'électrolyte solide.
